# EUROPEAN PATENT SPECIFICATION

(11) **EP 2 610 513 B1**
(45) Date of publication and mention of the grant of the patent: **13.08.2014**
(21) Application number: 12008367.0
(22) Date of filing: 17.12.2012
(51) Int. Cl.: F16C 33/66, F16N 7/38, F16N 29/00, H02K 5/173, H02K 11/00

(54) **Assembly for lubricating a bearing**
Anordnung zum Schmieren eines Lagers
Ensemble de lubrification d'un palier

(30) Priority: 02.01.2012 SE 1200008
(43) Date of publication of application: 03.07.2013
(73) Proprietor: Aktiebolaget SKF, S 415 50 Göteborg (SE)
(72) Inventor: Begg, Alan, S-411 26 Göteborg (SE); Murray, Brian, Torphins, Aberdeenshire AB31 4JR (GB)

(56) References cited:
- EP-A1- 1 538 357
- EP-A2- 1 770 295
- US-A- 5 634 531
- US-A1- 2001 047 647

## Description

### TECHNICAL FIELD OF THE INVENTION

According to a first aspect, the invention regards an assembly for lubricating a bearing.

According to a second aspect, the invention regards a system for lubricating a bearing.

### BACKGROUND OF THE INVENTION

Bearings, such as ball bearings or roller bearings, need to be lubricated to function properly. More specifically, a lubricating film needs to be built up between the moveable parts in the bearing in order to work properly. Therefore, there is a need to lubricate bearings in use. One way of lubricating bearings is to provide a lubrication system that supplies lubricant intermittently to the bearing during use of the bearing in its intended application.

A lubrication system generally comprises a pump for pumping a lubricant and pipes for supplying the lubricant to a bearing. The pump is generally driven by a motor, which motor is supplied with power via a battery or through hard wiring and the lubricant is supplied to the bearing in a certain fixed time interval.

Some of the disadvantages with known systems are:
a) It requires an external power source, provided either from a battery or through hard wiring. A battery has the limitation of a finite lifetime; hard wiring is not always possible or convenient. For example it cannot easily be used on a rotating part of the equipment.
b) This type of system gives a fixed amount of lubricant at a fixed time interval.
c) Current systems only provide a single type of lubricant.

EP 1 538 357 discloses a bearing device in which a lubricant storing tank, a pump, and a driving portion for the pump are disposed as a unit.

### SUMMARY OF THE INVENTION

An object of the invention is to overcome or ameliorate at least one of the disadvantages of the prior art, or to provide a useful alternative.

According to the first aspect, at least one of these objects are achieved by an assembly, comprising; a bearing with at least a first and a second part being moveable relative each other, a generator attached to or integrated in said bearing, a lubrication pump for outputting a lubricant to at least one lubricating point and an electrical motor or actuator connected to the generator to power the electrical motor or actuator. Furthermore, the lubrication pump is connected to and driven by the electrical motor or actuator and the lubrication pump is located outside the bearing.

An advantage of the invention is that the motor or actuator driving the lubrication pump will be powered by a generator that is connected to or integrated in the bearing. Due to this, it will be a self-contained unit which will be energized either at set time intervals, as in earlier systems, or 'on demand' when an integrated sensing system identifies when lubricant is required.

In an embodiment of the invention, the electrical motor is a step motor. With a step motor it is possible to more accurately control the amount of lubricant supplied to the bearing. Thus, a step motor provides an increased precision.

In an embodiment of the invention, the assembly further comprises an external lubrication reservoir connected to the lubrication pump. The word external in this context means that the reservoir is located outside the bearing.

In an example of the invention, the generator comprises a power element and a magnetic element, wherein the power element is connected to or integrated in one of the at least first moveable part and wherein the magnetic element is connected to or integrated in the second moveable part. According to the invention, the power element is a coil. In a further embodiment, the magnetic element is a permanent magnet. In the case when the first and second moveable parts of the bearing are an outer ring and an inner ring coaxially positioned and which can rotate relative each other, the power element, or coil, may be located on one of the rings at least partly around the ring and the magnetic element may be located on the other of the two rings. Thus, when the bearing rotates, electricity will be created in the power element due to a change in magnetic flux when the magnetic element passes the power element during rotation of the rings. In an embodiment, the magnetic element is a magnetic ring located on one of the rings with alternating north and south poles. In an embodiment, the at least first or second part of the bearing is a cage or a retainer. In a further embodiment of the invention, the at least first or second part of the bearing is at least one rolling element, such as a ball or roller. In an embodiment, the magnetic element is a magnetized seal. The seal may have alternating south and north poles. The seal is meant to seal an opening between the first and second rotating part of the bearing. The opening is the opening between the first and second rotating part seen from one of the axial sides of the bearing. Both axial sides of the bearing may of course be sealed with a magnetized seal. In an embodiment, one seal is a magnetized seal and the other seal is a non-magnetized seal.

In an embodiment of the invention, a power element and a magnetic element is connected to and/or integrated in the first part of the bearing, and wherein a second power element and a second magnetic element is connected to and/or Integrated in the second moveable part of the bearing. Due to this configuration, any of the at least two moveable parts of the bearing can output electrical energy from its respective power element when there is a relative movement between the two parts. This leads to an increased flexibility. In the case when the power elements and the magnetic elements are integrated into a rolling bearing, such as integrated into the inner ring and the outer ring of the rolling bearing, it will be possible to obtain electrical energy from either of the inner and outer ring. A bearing may be used in many different applications, wherein either the inner or outer ring rotates, and the other ring does not rotate. Thus, due to the specific circumstances for a certain application wherein the bearing may be used, it may be advantageous to connect electrical wires to either the inner or outer ring for outputting the electrical energy from the power element. Thus, a rolling bearing of this kind will be more flexible. Furthermore, there are cost advantages in only making one type of bearing, i.e. economies of scale.

In an embodiment of the invention, the lubrication pump is outputting a lubricant via at least one lubrication channel or pipe to the at least one lubricating point.

In an embodiment of the invention, the lubricant is any of a grease or oil. In an embodiment, when a grease is used, a step motor will provide a high accuracy in the amount of grease supplied to the bearing.

In an embodiment of the invention, the assembly further comprises a sensor element for sensing an amount of lubricant outputted to the at least one lubricating point.

In an embodiment of the invention, the assembly further comprises a control element for controlling the amount of lubricant outputted to the at least one lubricating point.

In an embodiment of the invention, the sensor element and/or the control element are powered by the generator. Therefore, there is no need for any external powering of the sensor and/or the control unit. Thus, a self-contained lubricating unit is provided.

In an embodiment of this invention, a sensing system is included to introduce lubricant in the right amount at the right time. Where the new system is coupled with appropriate sensing devices, lubricant can be introduced in the right amount at the right time in an appropriate interval. In an embodiment, the sensor system is powered by the generator, which thus provides a self-contained lubrication system.

In an embodiment of the invention, a processor is introduced taking inputs from one ore more sensors (the sensing system) to thereby control the lubrication pump to add lubricant (such as grease) according to a predetermined algorithm. The processor may for example take into account tribological conditions, the presence of moisture, bearing running hours and temperature. The processor may also be powered by the generator.

In an embodiment of this invention, two or more different types of lubricant can be used. These can be independently added, for example one type may be suitable for summer and another for winter operation; or one for high speed and one for low speed. Again, which type of lubricant is added at any time can be automatically determined by the sensing system or can be pre-programmed.

The bearing may be any kind of bearing, such as a rolling bearing. Examples of rolling bearings are deep groove ball bearings, self-aligning ball bearings, angular contact ball bearings, roller bearings, such as spherical roller bearings, tapered roller bearings and cylindrical roller bearings. Examples of bearings without rolling elements are plain bearings or journal bearings, which can equally benefit from this invention.

According to the second aspect of the invention, at least one of the objects are achieved by a system, comprising; the assembly according to any of the embodiments presented above and a shaft, wherein one of the two moveable parts is mounted on the shaft. It shall be noted that all embodiments of the first aspect of the invention are applicable to all embodiments of the second aspect of the invention and vice versa. An advantage of the invention is that the motor or actuator driving the lubrication pump will be powered by a generator that is connected to or integrated in the bearing. Due to this, it will be a self-contained unit which will be energized when the at least first and second parts will move relative each other. When the bearing is a rolling bearing, the relative movement will be in the form of a relative rotation of the bearing rings, rolling elements and the cage holding the rolling elements.

In an embodiment of the invention, the shaft is externally driven causing a rotation of the shaft and thereby creating electrical power in the generator.

### BRIEF DESCRIPTION OF DRAWINGS

Exemplifying embodiments of the present invention will now be described in more detail, with reference to the accompanying drawings, wherein:
Figure 1 discloses a cross section of an assembly and a system according to the invention.
Figure 2 discloses a side view of an assembly according to the invention.
Figure 3 discloses a cross section of an assembly and a system according to the invention.

The drawings show diagrammatic exemplifying embodiments of the present invention and are thus not drawn to scale. It shall be understood that the embodiments shown and described are exemplifying and that the invention is not limited to these embodiments. It shall also be noted that some details in the drawings may be exaggerated in order to better describe and illustrate the invention.

### DETAILED DESCRIPTION OF DRAWINGS

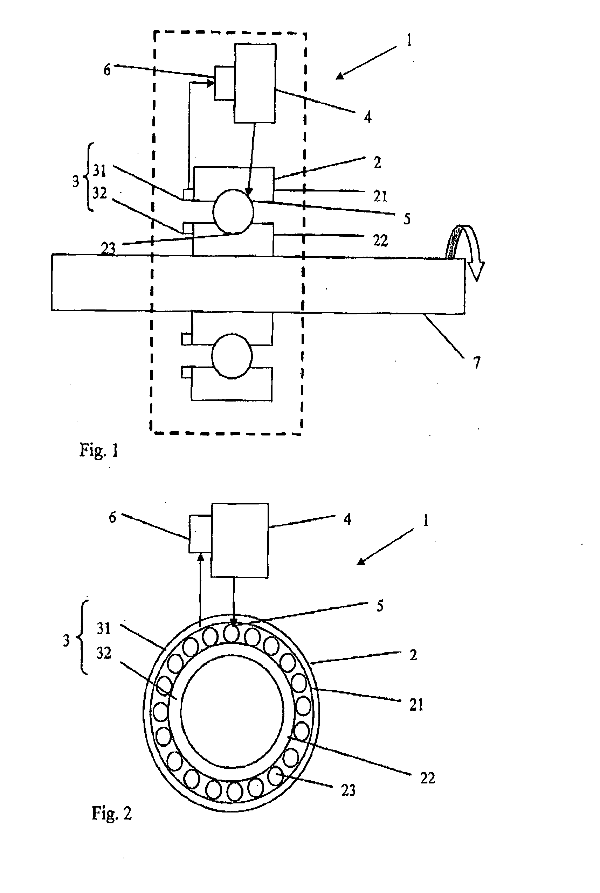

Figure 1 discloses an example. The drawing is a cross section of a plane, wherein the center axial line (not shown) of the shaft 7 is in the plane. The figure presents an assembly 1. The assembly 1 comprises a bearing 2 with at least an outer ring 21 and an inner ring 22 being rotatable relative each other. Rolling elements 23 are positioned between the two rings 21 and 22 Furthermore, a generator 3 is attached to the bearing 2. A lubrication pump 4 for outputting a lubricant to at least one lubricating point 5 is also disclosed. The assembly 1 further comprises an electrical motor 6 connected to the generator 3, wherein the generator 3 is meant to power the electrical motor 6. The lubrication pump 4 is connected to and driven by the electrical motor 6 and the lubrication pump 4 is located outside the bearing 2. In this embodiment, the electrical motor 6 is also located outside the bearing 2. The bearing is mounted on a shaft 7 which can rotate. The rotation of the shaft 7 will lead to that electrical power is generated in the generator 3, which in turn will power the electrical motor 6 that drives the lubrication pump 4. The dashed line in the figure shows that the solution provides a self-contained system, with no need of any additional power to drive the pump 4, except the kinetic energy from the shaft 7 rotation. The generator 3 presented in this embodiment is a coil 31 and a magnet 32 located on the outer ring 21 and inner ring 22 respectively.

Figure 2 discloses another example. The figure shows a cross section of a plane that is perpendicular to the axial rotation axle (not shown) of the bearing 2. The figure presents an assembly 1. The assembly 1 comprises a bearing 2 with an outer ring 21 and an inner ring 22 being rotatable relative each other. Rolling elements 23 are positioned between the two rings 21 and 22.Furthermore, a generator 3 is attached to the bearing 2. A lubrication pump 4 for outputting a lubricant to at least one lubricating point 5 is also disclosed. The assembly 1 further comprises an electrical motor 6 connected to the generator 3, wherein the generator 3 is meant to power the electrical motor 6. The lubrication pump 4 is connected to and driven by the electrical motor 6 and the lubrication pump 4 is located outside the bearing 2. In this embodiment, the electrical motor 6 is also located outside the bearing 2. The bearing is mounted on a shaft 7 which can rotate (not shown in this figure). The rotation of the shaft 7 will lead to that electrical power is generated in the generator 3, which in turn will power the electrical motor 6 that drives the lubrication pump 4. The generator 3 presented in this embodiment is a coil 31 and a magnet 32 located on the outer ring 21 and inner ring 22 respectively. The coil 31 may be extending around the outer ring 21, or it may extend in only a part of the circumference of the outer ring 21. The magnet may also extend around the inner ring 22 of the bearing 2, or it may also extend in a part of the circumference of the ring 22. In an embodiment, the coil 31 is located on the inner ring 22 and the magnet is located on the outer ring 21 of the bearing 2. In an embodiment, the magnet 32 is in the form of a ring with alternating north and south poles.

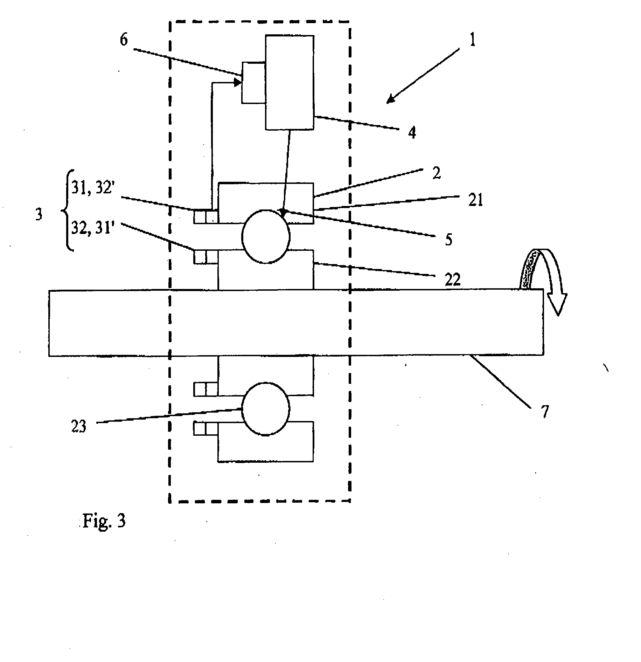

Figure 3 discloses an embodiment of the invention. The drawing is a cross section of a plane, wherein the center axial line (not shown) of the shaft 7 is in the plane. The figure presents an assembly 1. The assembly 1 comprises a bearing 2 with at least an outer ring 21 and an inner ring 22 being rotatable relative each other. Rolling elements 23 are positioned between the two rings 21 and 22. Furthermore, a generator 3 is attached to the bearing 2. A lubrication pump 4 for outputting a lubricant to at least one lubricating point 5 is also disclosed. The assembly 1 further comprises an electrical motor 6 connected to the generator 3, wherein the generator 3 is meant to power the electrical motor 6. The lubrication pump 4 is connected to and driven by the electrical motor 6 and the lubrication pump 4 is located outside the bearing 2. In this embodiment, the electrical motor 6 is also located outside the bearing 2. The bearing is mounted on a shaft 7 which can rotate. The rotation of the shaft 7 will lead to that electrical power is generated in the generator 3, which in turn will power the electrical motor 6 that drives the lubrication pump 4. The dashed line in the figure shows that the solution provides a self-contained system, with no need of any additional power to drive the pump 4, except the kinetic energy from the shaft 7 rotation. The generator 3 in this embodiment comprises a coil 31 and a magnetic element 32 located on the outer ring 21 and the inner ring 22, and another coil 31' and magnetic element 32' located on the inner ring 22 and outer ring 21 respectively. Due to this configuration, electrical power can be outputted from either the inner ring 22 or the outer ring 21 of the bearing. This will increase the flexibility of the bearing 2 and for the assembly 1.

## Claims

1. Assembly (1), comprising;
- a bearing (2) with at least a first (21) and second (22) part being moveable relative each other,
- a generator (3) attached to or integrated in said bearing (2),
- a lubrication pump (4) for outputting a lubricant to at least one lubricating point (5),
- an electrical motor or actuator (6) connected to the generator (3), wherein the generator (3) is meant to power the electrical motor or actuator (6),
- wherein the lubrication pump (4) is connected to and driven by the electrical motor or actuator (6), **CHARACTERIZED IN THAT**,
- the lubrication pump (4) is located outside the bearing (2),
- wherein the generator (3) comprises a coil (31) and a magnetic element (32),
- wherein the coil (31) and the magnetic element (32) is connected to and/or integrated in the first part (21) of the bearing, and wherein a second coil (31') and a second magnetic element (32') is connected to and/or integrated in the second moveable (22) part of the bearing (2).

2. Assembly (1) according to claim 1,
- wherein the electrical motor (6) is a step motor.

3. Assembly (1) according to any of the preceding claims,
- further comprising an external lubrication reservoir connected to the lubrication pump.

4. Assembly (1) according to any of the preceding claims,
- wherein the lubrication pump (4) is outputting a lubricant via at least one lubrication channel or pipe to the at least one lubricating point (5).

5. Assembly (1) according to any of the preceding claims,
- wherein the lubricant is any of a grease or oil.

6. Assembly (1) according to any of the preceding claims,
- further comprising a sensor element for sensing an amount of lubricant outputted to the at least one lubricating point (5).

7. Assembly (1) according to any of the preceding claims,
- further comprising a control element for controlling the amount of lubricant outputted to the at least one lubricating point (5).

8. Assembly (1) according to any of the preceding claims,
- futher comprising a sensing system to introduce lubricant in the right amount at the right time.

9. Assembly according to claim 6 and/or 7,
- wherein the sensor element and/or the control element are powered by the generator (3).

10. Assembly (1) according to claim 8,
- wherein the sensing system is powered by the generator (3).

11. Assembly (1) according to claim 8, further comprising,
- a processor connected to the sensing system arranged to control the lubrication pump (4) to add lubricant into the bearing according to a predetermined algorithm.

12. System, comprising;
- the assembly (1) according to any of claims 1 to 11,
- a shaft (7), wherein one of the two moveable parts (21,22) is mounted on the shaft (7).

13. System according to claim 12,
- wherein the shaft (7) is externally driven causing a rotation of the shaft (7) and thereby creating electrical power in the generator (3).

## Patentansprüche

1. Anordnung (1), welche aufweist:
- ein Lager (2) mit wenigstens einem ersten (21) und einem zweiten (22) Teil, die relativ zueinander beweglich sind,
- einen Generator (3), der an dem Lager (2) befestigt oder in dieses integriert ist,
- eine Schmierpumpe (4) zum Ausgeben eines Schmiermittels an mindestens eine Schmierstelle (5),
- einen Elektromotor oder elektrischen Aktuator (6), der mit dem Generator (3) verbunden ist, wobei der Generator (3) dazu bestimmt ist, den Elektromotor oder elektrischen Aktuator (6) mit Energie zu versorgen,
- wobei die Schmierpumpe (4) mit dem Elektromotor oder elektrischen Aktuator (6) verbunden ist und von ihm angetrieben wird, **dadurch gekennzeichnet, dass**
- die Schmierpumpe (4) außerhalb des Lagers (2) angeordnet ist,
- wobei der Generator (3) eine Spule (31) und ein Magnetelement (32) aufweist,
- wobei die Spule (31) und das Magnetelement (32) mit dem ersten Teil (21) des Lagers verbunden und/oder in diesen integriert sind, und wobei eine zweite Spule (31') und ein zweites Magnetelement (32') mit dem zweiten beweglichen Teil (22) des Lagers (2) verbunden und/oder in diesen integriert sind.

2. Anordnung (1) nach Anspruch 1,
- wobei der Elektromotor (6) ein Schrittmotor ist.

3. Anordnung (1) nach einem der vorhergehenden Ansprüche,
- welche ferner einen äußeren Schmiermittelbehälter aufweist, der mit der Schmierpumpe verbunden ist.

4. Anordnung (1) nach einem der vorhergehenden Ansprüche,
- wobei die Schmierpumpe (4) ein Schmiermittel über mindestens einen Schmierkanal oder eine Schmierleitung an die mindestens eine Schmierstelle (5) ausgibt.

5. Anordnung (1) nach einem der vorhergehenden Ansprüche,
- wobei das Schmiermittel ein Schmierfett oder Öl ist.

6. Anordnung (1) nach einem der vorhergehenden Ansprüche,
- welche ferner ein Sensorelement zum Erfassen einer Schmiermittelmenge, die an die mindestens eine Schmierstelle (5) ausgegeben wird, aufweist.

7. Anordnung (1) nach einem der vorhergehenden Ansprüche,
- welche ferner ein Steuerungselement zum Steuern der Schmiermittelmenge, die an die mindestens eine Schmierstelle (5) ausgegeben wird, aufweist.

8. Anordnung (1) nach einem der vorhergehenden Ansprüche,
- welche ferner ein Sensorsystem zum Zuführen von Schmiermittel in der richtigen Menge zum richtigen Zeitpunkt aufweist.

9. Anordnung nach Anspruch 6 und/oder 7,
- wobei das Sensorelement und/oder das Steuerungselement von dem Generator (3) mit Energie versorgt werden.

10. Anordnung (1) nach Anspruch 8,
- wobei das Sensorsystem von dem Generator (3) mit Energie versorgt wird.

11. Anordnung (1) nach Anspruch 8, welche ferner aufweist:
- einen mit dem Sensorsystem verbundenen Prozessor, der dafür eingerichtet ist, die Schmierpumpe (4) zu steuern, um das Lager nach einem vorbestimmten Algorithmus mit Schmiermittel aufzufüllen.

12. System, welches aufweist:
- die Anordnung (1) nach einem der Ansprüche 1 bis 11,
- eine Welle (7), wobei einer der zwei beweglichen Teile (21, 22) auf der Welle (7) angebracht ist.

13. System nach Anspruch 12,
- wobei die Welle (7) extern angetrieben wird, was eine Drehung der Welle (7) bewirkt und dadurch elektrische Energie in dem Generator (3) erzeugt.

## Revendications

1. Ensemble (1) comprenant :
- un palier (2) comprenant au moins une première (21) et une deuxième (22) partie déplaçables l'une par rapport à l'autre,
- un générateur (3) attaché audit palier (2) ou intégré dans celui-ci,
- une pompe de lubrification (4) pour délivrer un lubrifiant à au moins un point de lubrification (5),
- un moteur électrique ou un actionneur (6) connecté au générateur (3), le générateur (3) étant destiné à alimenter le moteur électrique ou l'actionneur (6),
- la pompe de lubrification (4) étant connectée au moteur électrique ou à l'actionneur (6) et étant entraînée par celui-ci, **CARACTERISE EN CE QUE**
- la pompe de lubrification (4) est située à l'extérieur du palier (2),
- le générateur (3) comprenant une bobine (31) et un élément magnétique (32),
- la bobine (31) et l'élément magnétique (32) étant connectés à et/ou intégrés dans la première partie (21) du palier, et une deuxième bobine (31') et un deuxième élément magnétique (32') étant connectés à et/ou intégrés dans la deuxième partie mobile (22) du palier (2).

2. Ensemble (1) selon la revendication 1,
- dans lequel le moteur électrique (6) est un moteur pas-à-pas.

3. Ensemble (1) selon l'une quelconque des revendications précédentes,
- comprenant en outre un réservoir de lubrification externe connecté à la pompe de lubrification.

4. Ensemble (1) selon l'une quelconque des revendications précédentes,
- dans lequel la pompe de lubrification (4) délivre un lubrifiant par le biais d'au moins un canal ou conduit de lubrification à l'au moins un point de lubrification (5).

5. Ensemble (1) selon l'une quelconque des revendications précédentes,
- dans lequel le lubrifiant est une graisse ou une huile.

6. Ensemble (1) selon l'une quelconque des revendications précédentes,
- comprenant en outre un élément de capteur pour détecter une quantité de lubrifiant délivrée à l'au moins un point de lubrification (5).

7. Ensemble (1) selon l'une quelconque des revendications précédentes,
- comprenant en outre un élément de commande pour commander la quantité de lubrifiant délivrée à l'au moins un point de lubrification (5).

8. Ensemble (1) selon l'une quelconque des revendications précédentes,
- comprenant en outre un système de détection pour introduire du lubrifiant en quantité appropriée au moment approprié.

9. Ensemble selon la revendication 6 et/ou la revendication 7,
- dans lequel l'élément de capteur et/ou l'élément de commande sont alimentés par le générateur (3).

10. Ensemble (1) selon la revendication 8,
- dans lequel le système de détection est alimenté par le générateur (3).

11. Ensemble (1) selon la revendication 8, comprenant en outre
- un processeur connecté au système de détection et prévu pour commander la pompe de lubrification (4) afin qu'elle ajoute du lubrifiant dans le palier en fonction d'un algorithme prédéterminé.

12. Système, comprenant :
- l'ensemble (1) selon l'une quelconque des revendications 1 à 11,
- un arbre (7), l'une des deux parties mobiles (21, 22) étant montée sur l'arbre (7).

13. Système selon la revendication 12,
- dans lequel l'arbre (7) est entraîné depuis l'extérieur, ce qui cause une rotation de l'arbre (7) et produit de ce fait de la puissance électrique dans le générateur (3).
